# EUROPEAN PATENT APPLICATION

(11) **EP 4 799 752 A1**
(43) Date of publication of application: **02.09.2026**
(21) Application number: 25841364.0
(22) Date of filing: 11.07.2025
(51) Int. Cl.: B23K 26/362, B23K 26/06, H01M 4/04

(54) **WOBBLE LASER PROCESSING APPARATUS AND PROCESSING METHOD**

(30) Priority: 15.07.2024 KR 20240093140
(71) Applicant: LG Energy Solution, Ltd., Seoul 07335 (KR)
(72) Inventor: KIM, Won Seop, Daejeon 34122 (KR); LEE, Seo Jun, Daejeon 34122 (KR)
(74) Representative: Plasseraud IP
(86) International application number: PCT/KR2025/010140
(87) International publication number: WO 2026/019163

(57) **Abstract**

A wobble laser processing device related to one example of the present invention comprises a laser oscillator arranged to oscillate a laser, and a wobble laser irradiator arranged to irradiate a coated electrode with a laser irradiated from the laser oscillator in a wobbling pattern, to process a partial region of the coated electrode during traveling, wherein at least one of a wobbling width, a wobbling height, and a wobbling frequency is adjustable based on a traveling speed of the coated electrode.

## Description

### Technical Field

The present invention relates to a wobble laser processing device and a wobble laser processing method, and more particularly, relates to a wobble laser notching device and a wobble laser notching method, for forming an electrode tab on a coated electrode.

This application claims the benefit of priority to Korean Patent Application No. 10-2024-0093140 dated July 15, 2024, and Korean Patent Application No. 10-2025-0093429 dated July 11, 2025, the entire disclosures of which are incorporated herein by reference.

### Background Art

A secondary battery is a rechargeable battery manufactured using a material capable of repeating oxidation and reduction processes between electric current and a substance. In the secondary battery, if a reduction reaction on the material is performed by electric current, the power is charged, and if an oxidation reaction on the material is performed, the power is discharged, where electricity is generated while such charging and discharging are performed repeatedly.

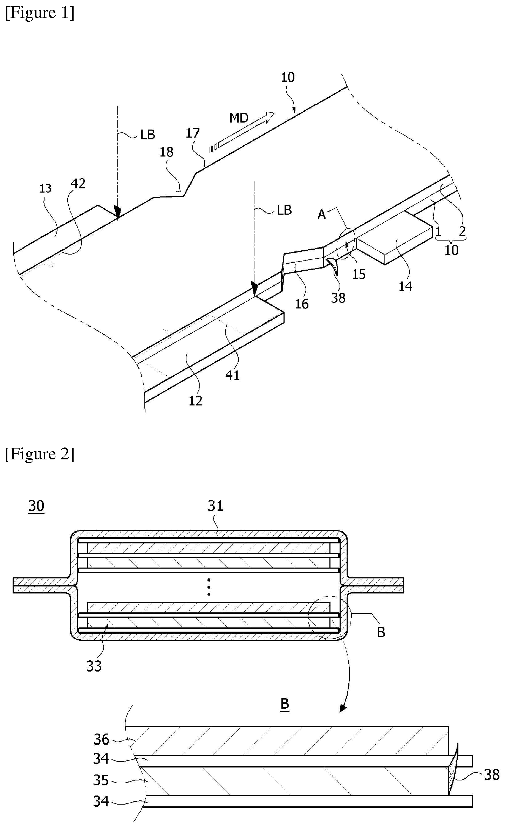

Figure 1 is a diagram for explaining a conventional laser notching method.

A secondary battery electrode is manufactured through coating, drying, rolling, slitting, and notching steps. The secondary battery electrode may be a negative electrode and a positive electrode. The secondary battery electrode may be a unit electrode that the coated electrode is cut to a secondary battery specification.

The coated electrode (10) is manufactured by applying a slurry containing an electrode active material to a base material (1) and drying it. The coated electrode (10) is rolled, to increase an energy density of a coating layer (2) in which the slurry is dried.

The coated electrode (10) can be slit along a length direction of the coated electrode (10) to have a single coated portion. Also, the coated electrode (10) can be notched into a shape that conforms to the specifications of the secondary battery.

As one example, in the notching step, uncoated portions (12, 13) of the coated electrode (10) can be cut to form an electrode tab (14) and/or notching grooves (16, 18) in the coated electrode (10).

In the conventional notching process, a method of physically cutting the electrode using a press mold or cutting it using laser irradiation, or the like have been employed.

Th notching method using a press mold has problems of reducing process economic feasibility because of generation of mold polishing costs due to the cost of grinding the press mold due to aging of the press mold, and facility immobilization due to press mold replacement.

The conventional laser notching is performed by irradiating the coated electrode (10) with a linear laser beam (LB) in a thickness direction of the coated electrode (10) to cut the coated electrode (10). The laser (LB) can cut a partial region of the coating layer (2) or the uncoated portion (12, 13) of the coated electrode (10) so that an electrode tab (14) and a notching groove (16, 18) are arranged along a preset virtual notching cutting line (41, 42).

As the coated electrode (10) is transferred, the laser irradiation point can move linearly along the notching cutting line (41 or 42).

Figure 2 is a cross-sectional diagram of a secondary battery (30), which is a diagram for explaining a problem when a burr (38) exists on an electrode of the secondary battery (30).

The coated electrode (10) passing through the laser irradiation point continued to transfer along a direction away from the laser irradiation point, whereby it could not be reprocessed. Accordingly, the conventional laser notching method had a problem that could not remove the burr (38) formed on the cut surface of the coated electrode (10) upon laser notching.

The burr (38) is a portion protruding outward from the cut surface (15, 17) of the coated electrode (10) in the thickness direction of the coated electrode (10). Such a burr (38) can cause defects in the secondary battery (30).

The coated electrode (10) is formed by laminating a coating layer (2) containing an electrode active material onto the base material (1). The base material (1) has an insulating resin laminated onto both sides of a metal layer. The metal layer may be, for example, aluminum, copper, or the like.

Referring to Figure 2, the secondary battery (30) may comprise an electrode assembly (33) and a pouch case (31). The secondary battery (30) is manufactured by accommodating and sealing the electrode assembly (33) and an electrolyte (not shown) in the pouch case (31).

The electrode assembly (33) is formed by laminating a negative electrode (35) and a positive electrode (36) sequentially via a separator (34).

For example, in a secondary battery (30), if the burr (38) present on the negative electrode (35) penetrates the separator (34) and contacts the positive electrode (36), the negative electrode (35) and the positive electrode (36) may be electrically connected via the burr (38) on the negative electrode (35). In this state, if charging and discharging of the secondary battery (30) are performed, shorts may occur in the secondary battery (30).

Meanwhile, to solve the problem of burrs (38) forming during the secondary battery electrode manufacturing process, if the laser output increases during the notching step, it can induce changes in the physical properties of the coating layer (2) of the coated electrode (10), and thus, can cause defects in the secondary battery electrode.

As one example, if the laser (LB) has a high output enough to melt the metal layer of the base material (1), upon laser cutting of the coated electrode (10), the metal layer of the base material (1) may form a lump of dross together with the insulating resin of the base material (1) while melting, and may affect the physical properties of the coated electrode (10) in this process.

The dross contains components of the metal layer, which can be subjected to energization with the coating layer (2). The coating layer contains an electrode active material and thus has electrical conductivity.

Accordingly, there is a need for a technical development capable of laser notching a coated electrode (10) so that no burr (38) or dross is generated on the cut surface (15) of the coated electrode (10).

### Disclosure

### Technical Problem

To solve such problems, the present invention is intended to provide a wobble laser processing device and a wobble laser processing method, capable of processing a coated electrode by cutting a partial region of the coated electrode using a wobbling laser.

Also, the present invention is intended to provide a wobble laser notching device and a wobble laser notching method, capable of forming electrode tabs and/or notching grooves in a coated electrode using a wobbling laser.

Furthermore, the present invention is intended to provide a wobble laser processing device and a wobble laser processing method, capable of slitting a coated electrode into multiple unit electrodes using a wobbling laser.

In addition, the present invention is intended to provide a wobble laser processing device and a wobble laser processing method, capable of adjusting one or more of a wobbling width, a wobbling height, and a wobbling frequency of a wobbling laser based on a traveling speed of a coated electrode.

### Technical Solution

To solve the above-described objects, a wobble laser processing device related to one example of the present invention comprises a laser oscillator arranged to oscillate a laser, and a wobble laser irradiator arranged to irradiate a coated electrode with a laser irradiated from the laser oscillator in a wobbling pattern, to process a partial region of the coated electrode during traveling, wherein at least one of a wobbling width, a wobbling height, and a wobbling frequency is adjustable based on a traveling speed of the coated electrode.

The wobble laser irradiator may comprise a first mirror drive part including a first movable mirror disposed on the entry side of the laser irradiated from the laser oscillator and arranged to rotate the first movable mirror in a first axial direction. Furthermore, the wobble laser irradiator may comprise a second mirror drive part including a second movable mirror disposed to reflect the laser reflected by the first movable mirror in a direction different from that of the first movable mirror and arranged to rotate the second movable mirror in a second axial direction orthogonal to the first axial direction.

Also, the first mirror drive part may comprise a first-axis galvanometer arranged to adjust at least one of a rotation angle and a rotation speed of the first movable mirror.

Furthermore, the second mirror drive part may comprise a second-axis galvanometer arranged to adjust at least one of a rotation angle and a rotation speed of the second movable mirror.

In addition, the wobble laser irradiator may comprise a lens arranged to focus the laser reflected from the second movable mirror. In the wobble laser irradiator, the first movable mirror may be arranged to reflect the laser transmitted from the laser oscillator to the second movable mirror. The second movable mirror may be arranged to reflect the laser reflected from the first movable mirror to the lens.

Also, the wobble laser processing device may comprise a transfer part for transferring the coated electrode, and a controller arranged to adjust at least one of the wobbling width, wobbling height, and wobbling frequency based on the traveling speed of the coated electrode. The transfer part may comprise one or more transfer rolls and an encoder.

The coated electrode may be a positive electrode or a negative electrode, and the wobble laser irradiator may be arranged to irradiate a coated portion (coating portion) or an uncoated portion of the coated electrode with a wobbling laser.

Also, upon a notching process of forming an electrode tab or a notching groove in the coated electrode, the wobble laser irradiator may perform wobbling laser irradiation so that the center of the wobbling pattern moves along a preset notching cutting line. Furthermore, the wobble laser irradiator may perform wobbling laser irradiation so that at least a portion of two adjacent wobbling patterns overlaps when the wobbling laser moves along the notching cutting line. In addition, the wobble laser irradiator may irradiate the uncoated portion or the coated portion of the coated electrode with the wobbling laser so that the center of the wobbling pattern moves along the preset notching cutting line. The wobbling laser may have the predetermined wobbling width, wobbling height, and wobbling frequency.

The wobbling pattern may have a circular shape with a predetermined radius. In this instance, the wobbling width and the wobbling height may have the same value.

The controller may be arranged to adjust the wobbling width and the wobbling height of the wobble laser irradiator based on the traveling speed of the coated electrode, and if the coated electrode travels slowly at a low speed lower than a first traveling speed of the coated electrode as preset, the controller may adjust a wobble amplitude to be greater than the wobble amplitude at the first traveling speed. That is, the controller may increase at least one of the wobbling width and the wobbling height when the coated electrode travels slowly at a low speed lower than a first traveling speed of the coated electrode as preset.

The controller may adjust the rotation angles of the first movable mirror and the second movable mirror based on the wobbling width and the wobbling height. That is, the controller may increase or decrease the wobbling width and the wobbling height by adjusting the rotation angles of the first movable mirror and the second movable mirror. As one example, the wobbling width may be a first axis amplitude of the first movable mirror. The wobbling height may be a second axis amplitude of the second movable mirror.

As one example, the controller may adjust the wobbling width and height, respectively, within a range of 10µm to 500µm.

The controller may be arranged to adjust the wobbling frequency of the wobble laser irradiator based on the traveling speed of the coated electrode, and if the coated electrode travels slowly at a low speed lower than a first traveling speed of the coated electrode as preset, the controller may adjust the wobbling frequency to be lower than the wobbling frequency at the first traveling speed. That is, the controller may reduce the wobbling frequency when the coated electrode travels slowly at a low speed lower than a first traveling speed of the coated electrode as preset.

The wobble laser irradiator may adjust the rotation speeds of the first movable mirror and the second movable mirror based on the wobbling frequency. The rotation speeds of the first and second movable mirrors may be increased or decreased in proportion to the wobbling frequency. That is, the controller may increase or decrease the wobbling frequency by adjusting the rotation speeds of the first movable mirror and the second movable mirror.

As one example, the controller may adjust the wobbling frequency within a range of 5,000Hz to 100,000Hz.

Furthermore, the controller may be arranged to adjust at least one of a laser output and a laser frequency of the laser oscillator based on the traveling speed of the coated electrode.

A wobble laser processing method related to one example of the present invention comprises a step (a) of irradiating a coated electrode with a laser irradiated from a laser oscillator in a wobbling pattern, to process a partial region of the coated electrode during traveling, and a step (b) of adjusting at least one of a wobbling width, a wobbling height, and a wobbling frequency based on a traveling speed of the coated electrode.

The wobble laser processing method is a method of processing a coated electrode using the wobble laser processing device, wherein the coated electrode may be a positive electrode or a negative electrode.

Also, the wobbling laser may have the predetermined wobbling width, wobbling height, and wobbling frequency. The wobbling pattern may have a circular shape with a predetermined radius. In this instance, the wobbling width and the wobbling height may have the same value.

Furthermore, in the step (a), an electrode tab may be formed by cutting a coated portion or an uncoated portion of the coated electrode. Furthermore, in the step (a), a notching groove may be formed by cutting a coated portion or an uncoated portion of the coated electrode. In a notching process, the wobble laser processing method may be a wobble laser notching method.

In addition, in the step (a), the coated electrode may be slit into a plurality of unit electrodes by cutting an uncoated portion of the coated electrode. In a slitting process, the wobble laser processing method may be a wobble laser slitting method.

Also, in the step (b), the wobbling width and height may be adjusted within a range of 10µm to 500µm, and the wobbling frequency may be adjusted within a range of 5,000Hz to 100,000Hz.

Furthermore, in the step (b), when the coated electrode travels slowly at a low speed lower than a first traveling speed of the coated electrode as preset, at least one of the wobbling width and the wobbling height may be increased.

In addition, in the step (b), when the coated electrode travels slowly at a low speed lower than the a first traveling speed of the coated electrode as preset, the wobbling width and the wobbling height may be increased simultaneously.

Furthermore, in the step (b), when the coated electrode travels slowly at a low speed lower than a first traveling speed of the coated electrode as preset, the wobbling frequency may be decreased.

### Advantageous Effects

As discussed above, the wobble laser processing device and processing method related to one example of the present invention have the following effects.

The coated electrode can be processed by cutting a partial region of the coated electrode using a wobbling laser. Particularly, when cutting a partial region of the coated electrode, overlapping processing using the wobbling laser is possible, and accordingly, burr formation can be prevented.

Also, upon laser notching for forming electrode tabs or notching grooves, by removing burrs from the cut surface of the coated electrode, it is possible to improve a notching quality of the cut surface of the coated electrode.

Furthermore, by adjusting one or more of a wobbling width, a wobbling height, and a wobbling frequency of the wobbling laser based on the traveling speed of the coated electrode, it is possible to improve a notching quality of the coated electrode.

In addition, by uniformly adjusting an overlapping range of the wobbling laser depending on the traveling speed of the coated electrode, it is possible to improve a notching quality of the coated electrode.

### Description of Drawings

Figure 1 is a diagram for explaining a conventional laser notching method.
Figure 2 is a cross-sectional diagram of a secondary battery, which is a diagram for explaining problems when a burr is present on an electrode of the secondary battery.
Figure 3 schematically illustrates a configuration state diagram of a wobble laser processing device according to one example of the present invention.
Figure 4 schematically illustrates a configuration diagram of a wobble laser processing device according to one example of the present invention.
Figure 5 schematically illustrates an operation state diagram that a wobble laser processing device according to one example of the present invention irradiates a coated electrode during traveling with a wobbling laser.
Figure 6 schematically illustrates an operation state diagram of a wobble laser irradiator according to one example of the present invention.
Figures 7 and 8 are diagrams for explaining wobbling patterns formed on a coated electrode during traveling upon operation of a wobble laser irradiator according to one example of the present invention.
Figure 8(a) shows a wobbling pattern of a wobbling laser upon normal traveling of a coated electrode, and Figure 8(b) shows a wobbling pattern of a wobbling laser upon low-speed traveling of a coated electrode.

### Mode for Invention

Hereinafter, a wobble laser processing device and a wobble laser processing method related to one example of the present invention will be described with reference to the accompanying drawings.

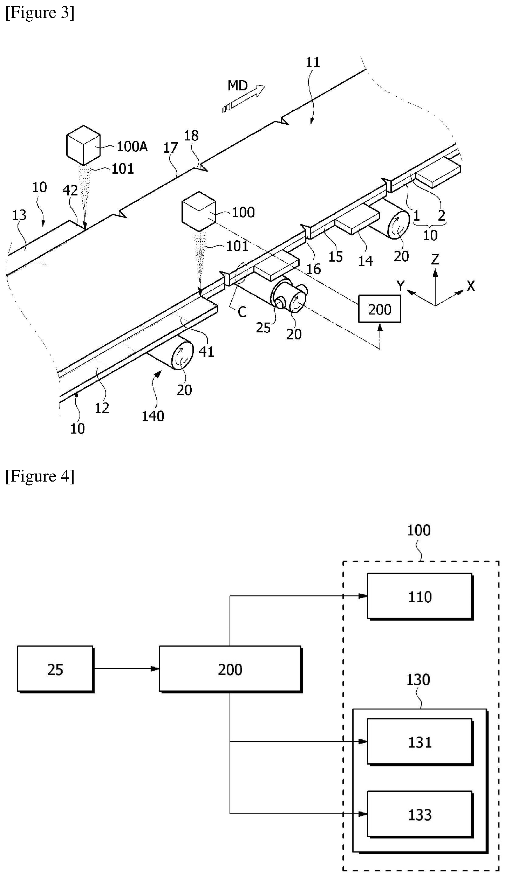

Figure 3 schematically illustrates a configuration state diagram of a wobble laser processing device according to one example of the present invention, and Figure 4 schematically illustrates a configuration diagram of a wobble laser processing device according to one example of the present invention.

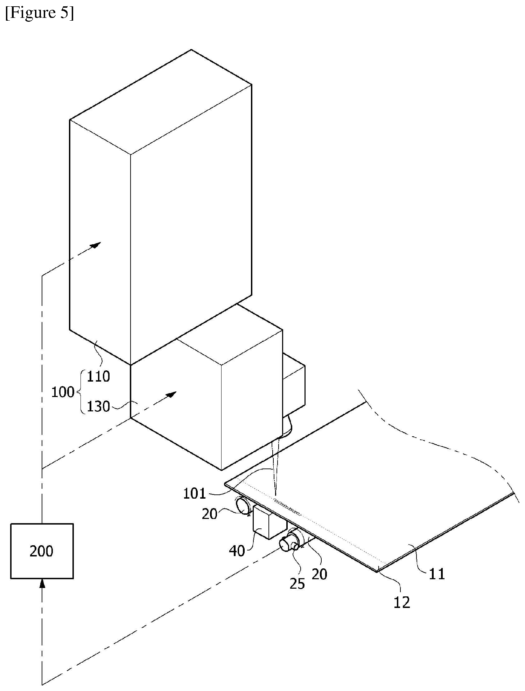

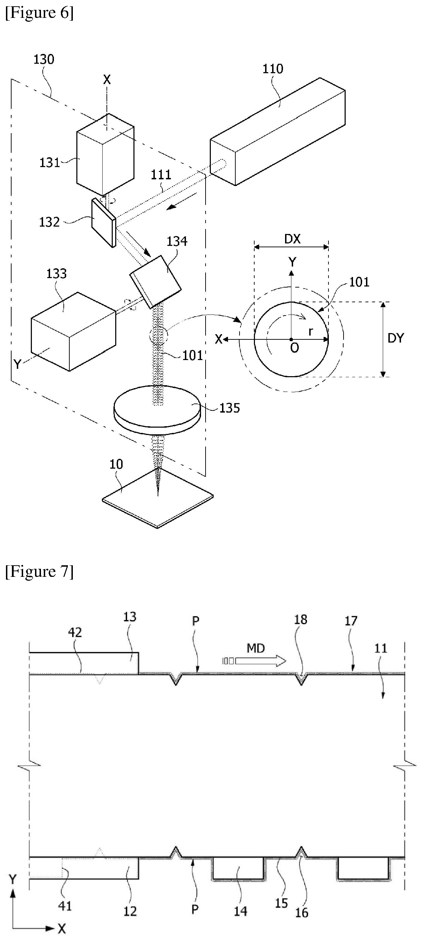

Furthermore, Figure 5 schematically illustrates an operation state that a wobble laser processing device according to one example of the present invention irradiates a coated electrode during traveling with a wobbling laser, and Figure 6 schematically illustrates an operation state diagram of a wobble laser irradiator according to one example of the present invention.

Referring to Figures 3 to 6, the wobble laser processing device (100) related to the present example comprises a laser oscillator (110) arranged to oscillate a laser (111). The laser oscillator (110) may be arranged so that the output and frequency of the laser (111) are adjustable. As one example, the laser oscillator (111) may be arranged to generate a picosecond or femtosecond laser.

Furthermore, the wobble laser processing device (100) comprises a wobble laser irradiator (130) arranged to irradiate the coated electrode (10) with a laser irradiated from the laser oscillator (110) in a wobbling pattern (P), to process a partial region of the coated electrode (10) during traveling, and capable of adjusting at least one of a wobbling width (DX), a wobbling height (DY), and a wobbling frequency based on the traveling speed of the coated electrode (10).

The wobble laser irradiator (130) may be connected to the laser oscillator (110) and comprise a plurality of movable mirrors (132, 134) arranged to reflect the laser (111) in different axial directions.

In this document, the wobble laser processing device and processing method may be applied to a slitting process in which the coated electrode (10) is slit along the length direction (x-axial direction) so that the coated electrode (10) has a single coated portion, or a notching process in which an electrode tab or a notching groove is formed in the coated electrode (10). Hereinafter, for convenience of explanation, the device and method used in the notching process will be described below as an example.

Referring to Figure 3, the wobble laser processing device (100, 100A) is a device for laser-processing an electrode tab (14) and/or a notching groove (16, 18) in a coated electrode (10) during traveling. The wobble laser processing device (100, 100A) may be provided as a pair, and the pair of wobble laser processing devices (100, 100A) may be disposed to process the uncoated portions (12, 13), respectively, provided on both sides of the coating layer (2) of the coated electrode (10). As one example, the pair of wobble laser processing devices (100, 100A) may be disposed to be spaced apart therefrom on the top of the coated electrode (10) during traveling.

The coated electrode (10) comprises a coated portion (11) and uncoated portions (12, 13). The coated portion (11) is a portion where the coating layer (2) is formed on the base material (1). The uncoated portions (12, 13) are portions where the coating layer (2) is not formed. The uncoated portions (12, 13) may be arranged on one side or both sides of the coated portion (11).

When the coating layer (2) comprises a positive electrode active material, the coated electrode (10) may be a positive electrode, and when the coating layer (2) comprises a negative electrode active material, the coated electrode (10) may be a negative electrode.

As one example, when the coated electrode (10) is a positive electrode, an electrode tab (14) may be formed in the uncoated portion (12) located on one side of the coating layer (2), and the uncoated portion (13) located on the other side of the coating layer (2) may be removed. When the coated electrode (10) is a positive electrode, the wobbling laser (101) may be irradiated only to the uncoated portions (12, 13). As another example, when the coated electrode (10) is a negative electrode, an electrode tab (14) and/or a notching groove (16) may be formed in the uncoated portion (12) located on one side of the coating layer (2), and a notching groove (18) may be formed in the uncoated portion (13) located on the other side of the coating layer (2). When the coated electrode (10) is a negative electrode, the wobbling laser (101) may be irradiated to a partial region of the coating layer (2) and the uncoated portions (12, 13). The notching groove (16) may be formed by cut-processing a partial region of the coating layer (2) and the uncoated portion.

The wobble laser processing device (100) may comprise a transfer part (140) for transferring the coated electrode (10), and the transfer part may comprise one or more transfer rolls (20) and an encoder (25).

In a notching process, the coated electrode (10) may travel in the traveling direction (MD) along the transfer rolls (20), and while it passes through the wobble laser processing device (100, 100A), an electrode tab (14) and a notching groove (16 and/or 18) may be arranged.

An encoder (25) may be mounted on the transfer roll (20). The encoder (25) may be mounted on the transfer roll (20) facing the wobble laser processing device (100). The encoder (25) is a device capable of accurately measuring a speed and a position by converting a rotational motion into a digital signal.

The encoder (25) may measure the traveling speed of the coated electrode (10). The encoder (25) may provide the measured traveling speed to the controller (200).

The controller (200) may control operation of the wobble laser processing device (100) depending on the traveling speed of the coated electrode (10) measured by the encoder (25).

Also, the controller (200) may adjust the laser (111) output and frequency of the laser oscillator (110).

Furthermore, the controller (200) may adjust at least one of the wobbling width, the wobbling height, and the wobbling frequency of the wobble laser irradiator (130). In addition, the controller (200) may be arranged to automatically adjust the wobbling width, the wobbling height, and the wobbling frequency based on the traveling speed of the coated electrode (10).

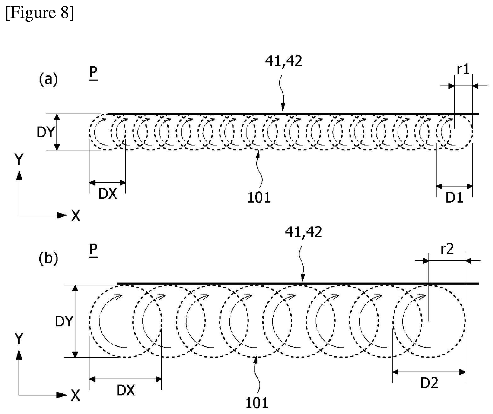

Figures 7 and 8 are diagrams for explaining wobbling patterns formed on a coated electrode during traveling upon operation of a wobble laser irradiator according to one example of the present invention.

Referring to Figure 6, the wobbling laser (101) may have the predetermined wobbling width (DX), wobbling height (DY), and wobbling frequency. The wobbling pattern (P) may be a circular shape with a predetermined radius (r). The wobbling pattern (P) has the wobbling width (DX) and the wobbling height (DY). In this instance, the wobbling width and the wobbling height may have the same value.

The wobbling width (DX) may be the X-axial direction length of the wobbling laser (101) forming the wobbling pattern (P). The wobbling height (DY) may be the Y-axial direction length of the wobbling laser (101).

Referring to Figures 6 and 7, the shape (pattern) of the wobbling laser (101) may vary depending on the wobbling width (DX) and the wobbling height (DY).

The wobbling width (DX) and the wobbling height (DY) may be geometry conditions of the wobbling pattern (P). The wobbling width (DX) and the wobbling height (DY) may be set to the same value or different values.

The wobbling laser (101) may be irradiated to the uncoated portion (12 and/or 13) of the coated electrode (10) so that the center (O) of the wobbling pattern (P) moves along the notching cutting line (41, 42).

The wobbling pattern (P) may be a pattern whose start and end points are connected in a closed or partially opened curve shape along the traveling direction (MD) of the coated electrode (10).

Referring to Figures 7 and 8, as one example, the wobbling pattern (P) may have a circular shape with a predetermined radius (r1, r2) if the wobbling width (DX) and the wobbling height (DY) have the same value. The center of the wobbling pattern (P) may move linearly along the notching cutting line.

As another example, the wobbling pattern may have an elliptical shape if any one value of the wobbling width (DX) and the wobbling height (DY) is greater than the other value.

The wobbling pattern (P) may be formed on the X-Y plane of the coated electrode (10) during traveling. The X-Y plane of the coated electrode (10) may be a plane on which the coating layer (2) of the coated electrode (10) is provided. In this document, the X-axis represents the traveling direction of the coated electrode (10) (or the length direction of the coated electrode), the Y-axis represents the width direction of the coated electrode (10), and the Z-axis represents the height direction of the coating layer (2) in the coated electrode (10).

When the center (O) of the wobbling pattern (P) moves along the notching cutting line, at least a portion of two adjacent wobbling patterns (P) may be moved to overlap.

While the wobbling laser (101) is continuously irradiated to the coated electrode (10) during traveling in the wobbling pattern (P) along the notching cutting line (41 and/or 42), it is possible to overlap-process the cut surface (16 and/or 17) of the coated electrode (10) at least once.

That is, the coated electrode (10) may be cut in a wobbling pattern (P, see Figures 7 and 8) having a predetermined radius (r1, r2) to overlap-process the cut surface (15, 17) of the coated electrode (10). That is, the wobble laser (101) may laser-process the cut surface (15 and/or 16) of the coated electrode (10) at least twice in the portion where the wobbling patterns (P) overlap.

Hereinafter, the constitutions of the laser oscillator (110) and the wobble laser irradiator (130) for implementing the wobbling laser (101) and the wobbling pattern (P) will be described.

Referring to Figure 5, the laser oscillator (110) may be mounted on the wobble laser irradiator (130). The laser oscillator (110) is a device that generates, amplifies, and emits a laser. Referring to Figure 6, the laser (111) emitted from the laser oscillator (110) is transmitted to the wobble laser irradiator (130).

Referring to Figure 5, the wobble laser irradiator (130) is connected to the laser oscillator (110). The wobble laser irradiator (130) may be arranged to irradiate the uncoated portion (12, 13) of the coated electrode (10) during traveling with the wobble laser (101) along a preset notching cutting line (41, 42).

The notching cutting lines (41, 42) are virtual cutting lines for cutting at least one of an electrode tab (14) and a notching groove (16, 18) on the coated electrode (10). The notching cutting lines (41, 42) may be arranged to form only the electrode tab (14), only the notching groove (16 and/or 18), or both the electrode tab (14) and the notching groove (16) on the coated electrode (10).

As one example, the notching cutting line (41, 42) may comprise a first notching cutting line (41) and a second notching cutting line (42). The first notching cutting line (41) may be a cutting line for cutting an electrode tab (14) on the first uncoated portion (12) and a first notching groove (16) on the coated portion (11). The second notching cutting line (42) may be a cutting line for cutting the second uncoated portion (13) and a second notching groove (18) on the coated portion (11).

The wobble laser irradiator (130) may cut the first uncoated portion (12) along the first notching cutting line (41) to process the electrode tab (14) and the first notching groove (16) on the first cut surface (15) of the coated electrode (10).

The wobble laser irradiator (130) may cut the second uncoated portion (13) along the second notching cutting line (42) to process the second notching groove (18) on the second cut surface (17) of the coated electrode (10).

The wobble laser irradiator (130) may be disposed to be coaxially spaced apart from a mask jig (40). The wobble laser irradiator (130) may be disposed for the wobbling laser (101) to be irradiated toward the mask jig (40).

The mask jig (40) is disposed at the bottom of the travel path of the coated electrode (10). The mask jig (40) may be arranged so that the wobbling laser (101) cuts it into a desired shape at a desired location.

The mask jig (40) may have a mask opening (not shown). The mask opening (not shown) may be arranged so that the wobbling laser (101) penetrating the coated electrode (10) is approachable.

Referring to Figure 6, the wobble laser irradiator (130) may comprise a first mirror drive part (131), a first movable mirror (132), a second mirror drive part (133), a second movable mirror (134), and a lens (135).

The first mirror drive part (131) comprises the first movable mirror (132).

The first movable mirror (132) may be disposed to reflect the laser transmitted from the laser oscillator (110) to the second movable mirror (134). The first movable mirror (132) may be arranged to reflect the laser while rotating at a predetermined angle.

The first mirror drive part (131) may be arranged to rotate the first movable mirror (132) in a first axial direction. Here, the first axial direction may be the X-axial direction, for example, the length direction of the coated electrode (10).

The first mirror drive part (131) may comprise a first-axis galvanometer arranged to adjust at least one of the rotation angle and rotation speed of the first movable mirror (132).

The first mirror drive part (131) may adjust the rotation angle of the first movable mirror (132) based on the wobbling width (DX). The first mirror drive part (131) may adjust the rotation speed of the first movable mirror (132) based on the wobbling frequency.

The rotation angle of the first movable mirror (132) increases as the wobbling width (DX) increases. That is, the wobbling width (DX) may be adjusted depending on the rotation angle of the first movable mirror (132). The rotation speed of the first movable mirror (132) increases as the wobbling frequency increases. That is, the wobbling frequency may be adjusted depending on the rotation speed of the first movable mirror (132).

The wobbling width (DX) may be adjusted depending on the traveling speed of the coated electrode (10) transferred by the transfer roll (20). The traveling speed of the coated electrode (10) may vary while traveling along the transfer roll (20) in the traveling direction (MD). The traveling speed (V) of the coated electrode (10) may be measured by the encoder (25) mounted on the transfer roll (20).

For example, if the coated electrode (10) is decelerated at a slower speed than a set first traveling speed while traveling at the first traveling speed, the wobbling width (DX) may be adjusted to be greater than the wobbling width (DX) according to the first traveling speed. Here, the first traveling speed (also referred to as a normal speed) is a speed that the coated electrode (10) travels roll-to-roll upon the notching process of the coated electrode (10).

The second mirror drive part (133) comprises the second movable mirror (134).

The second movable mirror (134) may be disposed to reflect the laser (111) reflected from the first movable mirror (132) onto the lens (135). The second movable mirror (134) may be arranged to reflect the laser (111) while rotating at a predetermined angle.

The second mirror drive part (133) is arranged to rotate the second movable mirror (134) in a second axial direction. The second axial direction is a direction orthogonal to the first axial direction. The second axial direction may be the Y-axial direction, for example, the width direction of the coated electrode (10).

The second mirror drive part (133) may comprise a second-axis galvanometer arranged to adjust at least one of the rotation angle and rotation speed of the second movable mirror (134).

The second mirror drive part (133) may adjust the rotation angle of the second movable mirror (134) based on the wobbling height (DY). The second mirror drive part (133) may adjust the rotation speed of the second movable mirror (134) based on the wobbling frequency.

The rotation angle of the second movable mirror (134) increases as the wobbling height (DY) increases. Furthermore, the rotation speed of the second movable mirror (134) increases as the wobbling frequency increases.

The wobbling height (DY) may be adjusted depending on the traveling speed of the coated electrode (10). If the coated electrode (10) is decelerated at a slower speed than a set first traveling speed while traveling at the first traveling speed, the wobbling height (DY) may be adjusted to be greater than the wobbling height (DY) according to the first traveling speed.

The lens (135) may be arranged to focus the wobbling laser (101). The lens (135) is disposed in an irradiation path of the wobbling laser (101). The lens (135) may comprise an F-theta lens (135). The lens (135) may be arranged so that the wobbling laser (101) maintains a constant focus on the cutting region of the uncoated portion (12, 13) of the coated electrode (10).

Referring to Figure 6, upon operation of the wobble laser processing device (100), the laser (111) is transmitted from the laser oscillator (110) to the first movable mirror (132), and reflected from the first movable mirror (132) to the second movable mirror (134). The laser (111) may be converted into a wobbling laser (101) having a predetermined radius (r) while rotating at a predetermined angle through the first movable mirror (132) and the second movable mirror (134).

Furthermore, the wobbling laser (101) may be focused on the lens (135) and irradiated along the notching cutting lines (41, 42) onto the uncoated portions (12, 13) of the coated electrode (10), thereby cutting the uncoated portions (12, 13) of the coated electrode (10). The wobbling laser (101) may remove burrs generated on the cut surfaces (15, 17) of the coated electrode (10) upon laser notching by overlap-processing the cut surfaces (15, 17) of the coated electrode (10) in a wobbling pattern (P).

The controller (200) may adjust at least one of the rotation angle and rotation speed of the first mirror drive part (131) and the second mirror drive part (133).

The wobbling width (DX) and wobbling height (DY) of the wobbling laser (101) may be adjusted through the rotation angle adjustment of the first movable mirror (132) and the second movable mirror (134).

The wobbling width (DX) and wobbling height (DY) may vary depending on the rotation angles of the first and second movable mirrors (132, 134). The rotation angles of the first and second movable mirrors (132, 134) increase as the wobbling width (DX) and wobbling height (DY) increase.

Figure 8(a) shows a wobbling pattern of a wobble laser (101) upon normal traveling of a coated electrode (10), and Figure 8(b) shows a wobbling pattern of a wobble laser (101) upon low-speed traveling of a coated electrode (10).

The controller (200) may adjust the wobbling width and height of the wobble laser irradiator (130) based on the traveling speed of the coated electrode (10). The controller (200) may adjust the wobbling width and height within a range of 10µm to 500µm.

As one example, the normal traveling and low-speed traveling of the coated electrode (10) are phrases expressing the relative difference in traveling speed of the coated electrode (10). The normal traveling of the coated electrode (10) may be a state where the coated electrode (10) travels at a preset first traveling speed upon the notching process. The low-speed traveling of the coated electrode (10) may be a state where the coated electrode (10) travels at a speed slower than the first traveling speed due to various causes such as shutdown of notching facilities.

Upon normal traveling of the coated electrode (10), the wobbling laser (101) may form a wobbling pattern (P) having a first diameter (D1) along the notching cutting lines (41, 42) while rotating at a first radius (r1). For example, the first diameter (D1) may be 10µm.

The controller (200) may increase the wobbling width and height if the coated electrode (10) travels slowly at a second traveling speed lower than the preset first traveling speed of the coated electrode (10).

For example, if the coated electrode (10) travels slowly at a low speed, the controller (200) may irradiate the coated electrode (10) with a wobbling laser (101) having a second radius (r2). Referring to Figure 8(b), upon traveling of the coated electrode (10) at a low speed, the wobbling laser (101) may form a wobbling pattern (P) having a second diameter (D2) along the notching cutting lines (41, 42) while rotating at a second radius (r2) greater than the first radius (r1). As one example, the second diameter (D2) may be 500µm.

Furthermore, the controller (200) may adjust the wobbling frequency of the wobble laser irradiator (130) based on the traveling speed of the coated electrode (10). The controller (200) may adjust the wobbling frequency within a range of 5,000Hz to 100,000Hz.

For example, when the coated electrode (10) travels normally at the first traveling speed, the wobbling frequency of the wobbling laser (101) may be set to 100,000Hz.

When the coated electrode (10) travels slowly at a second traveling speed (e.g., 100mm/s) lower than the preset first traveling speed (e.g., 1,000mm/s) of the coated electrode (10), the controller (200) may adjust the wobbling frequency to 10,000Hz, which is lower than 100,000Hz.

To adjust the wobbling frequency, the controller (200) may adjust the rotation speeds of the first movable mirror (132) and the second movable mirror (134). The rotation speeds of the first and second movable mirrors (132, 134) may increase as the wobbling frequency increases, and may decrease as the wobbling frequency decreases.

Upon normal traveling of the coated electrode (10), the wobble laser (101) rapidly vibrates the coated electrode (10) at a high wobbling frequency, thereby evenly distributing the heat of the wobble laser (101) to the cutting surfaces (15, 17) of the coated electrode (10), whereby it is possible to prevent thermal deformation of the coated electrode (10) due to the heat of the laser.

Upon low-speed traveling of the coated electrode (10), the wobble laser (101) may laser-notch the coated electrode (10) at a wobbling frequency lower than the wobbling frequency upon normal traveling. This can prevent deterioration of cutting quality due to thermal effects on the coated electrode (10) by reducing the vibration frequency of the wobble laser (10) irradiated onto the coated electrode (10) upon low-speed traveling of the coated electrode (10).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the wobble laser processing device and processing method related to one example of the present invention, upon cutting a partial region of a coated electrode in a notching process, overlap-processing with a wobble laser is possible, and it is possible to prevent burr formation.

## Claims

1. A wobble laser processing device comprising:
a laser oscillator arranged to oscillate a laser; and
a wobble laser irradiator arranged to irradiate a coated electrode with a laser irradiated from the laser oscillator in a wobbling pattern, to process a partial region of the coated electrode during traveling, wherein at least one of a wobbling width, a wobbling height, and a wobbling frequency is adjustable based on a traveling speed of the coated electrode.

2. The wobble laser processing device according to claim 1, wherein the wobble laser irradiator comprises:
a first mirror drive part including a first movable mirror disposed on the entry side of the laser irradiated from the laser oscillator and arranged to rotate the first movable mirror in a first axial direction; and
a second mirror drive part including a second movable mirror disposed to reflect the laser reflected by the first movable mirror in a direction different from that of the first movable mirror and arranged to rotate the second movable mirror in a second axial direction orthogonal to the first axial direction.

3. The wobble laser processing device according to claim 2, wherein
the first mirror drive part comprises a first-axis galvanometer arranged to adjust at least one of a rotation angle and a rotation speed of the first movable mirror, and
the second mirror drive part comprises a second-axis galvanometer arranged to adjust at least one of a rotation angle and a rotation speed of the second movable mirror.

4. The wobble laser processing device according to claim 2, wherein
the wobble laser irradiator comprises a lens arranged to focus the laser reflected from the second movable mirror.

5. The wobble laser processing device according to claim 1, further comprising:
a transfer part for transferring the coated electrode; and
a controller arranged to adjust at least one of the wobbling width, wobbling height, and wobbling frequency based on the traveling speed of the coated electrode.

6. The wobble laser processing device according to claim 5, **characterized in that**
the controller increases at least one of the wobbling width and the wobbling height when the coated electrode travels slowly at a low speed lower than a first traveling speed of the coated electrode as preset.

7. The wobble laser processing device according to claim 5, **characterized in that**
the controller reduces the wobbling frequency when the coated electrode travels slowly at a low speed lower than a first traveling speed of the coated electrode as preset.

8. The wobble laser processing device according to claim 1, **characterized in that**
the wobbling pattern is a circular shape with a predetermined radius.

9. The wobble laser processing device according to claim 8, **characterized in that**
the wobble laser irradiator irradiates the uncoated portion or the coated portion of the coated electrode so that the center of the wobbling pattern moves along the preset notching cutting line.

10. A wobble laser processing method comprising:
a step (a) of irradiating a coated electrode with a laser irradiated from a laser oscillator in a wobbling pattern, to process a partial region of the coated electrode during traveling; and
a step (b) of adjusting at least one of a wobbling width, a wobbling height, and a wobbling frequency based on a traveling speed of the coated electrode.

11. The wobble laser processing method according to claim 10, **characterized in that**
the coated electrode is a positive electrode or a negative electrode, and
in the step (a), an electrode tab is formed by cutting a coated portion or an uncoated portion of the coated electrode.

12. The wobble laser processing method according to claim 10, **characterized in that**
the coated electrode is a positive electrode or a negative electrode, and
in the step (a), the coated electrode is slit into a plurality of unit electrodes by cutting an uncoated portion of the coated electrode.

13. The wobble laser processing method according to claim 10, **characterized in that**
in the step (b), when the coated electrode travels slowly at a low speed lower than a first traveling speed of the coated electrode as preset, at least one of the wobbling width and the wobbling height is increased.

14. The wobble laser processing method according to claim 13, **characterized in that**
in the step (b), when the coated electrode travels slowly at a low speed lower than the a first traveling speed of the coated electrode as preset, the wobbling width and the wobbling height are increased simultaneously.

15. The wobble laser processing method according to claim 10, **characterized in that**
in the step (b), when the coated electrode travels slowly at a low speed lower than a first traveling speed of the coated electrode as preset, the wobbling frequency is decreased.
